# EUROPEAN PATENT SPECIFICATION

(11) **EP 1 636 953 B1**
(45) Date of publication and mention of the grant of the patent: **04.08.2010**
(21) Application number: 04801788.3
(22) Date of filing: 13.04.2004
(51) Int. Cl.: H04L 12/58

(54) **ACTIONABLE MESSAGING**
HANDLUNGSBEFÄHIGENDE NACHRICHTENÜBERMITTLUNG
MESSAGERIE DE COMMANDE

(30) Priority: 25.06.2003 US 482383 P; 15.10.2003 US 687219
(43) Date of publication of application: 22.03.2006
(73) Proprietor: Oracle International Corporation, Redwood Shores, CA 94065 (US)
(72) Inventor: WANG, Calvin, Millbrae, CA 94030 (US); YE, Zhou, Fremont, CA 94555 (US); SHI, Jimmy, Fremont California 94539 (US); SHAH, Ali, Dubai (AE); ALPER, Okan, Sunnyvale, CA 94085 (US)
(74) Representative: Skone James, Robert Edmund
(86) International application number: PCT/US2004/011388
(87) International publication number: WO 2005/011214

(56) References cited:
- WO-A-02/052475
- US-A- 6 101 485
- US-A1- 2002 131 561

## Description

### BACKGROUND OF THE INVENTION

The present invention generally relates to messaging and more specifically to techniques for providing messages that enable actions to be performed.

Message alerts are used by many entities as a notification tool. Messages may be cent in response to an event or as a source of information. For example, stock quotes may be cent when a stock reaches a certain price. Message alerts provide timely delivery of information at a lower cost than using other communication channels such as using customer service representatives to notify users of events. As more and more users adopt messaging devices that can receive message alerts, message alerts will become increasingly valuable.

The message alerts that are sent to devices are typically stand-alone messages. For example, the messages are only meant to be notifications and are not meant to be responded to. Thus, if a user desires to respond or perform any actions after viewing the message alert, the user typically switches communication channels to perform the desired action. For example, the user may receive the stock alert notification in a text message and then may use the internet in order to buy or sell the stock.

Accordingly, methods and apparatus for enabling a user to respond to a message with desired actions are desired.
[0005A] US 2002/0131561A1 describes a method and system for providing unified messages services to a subscriber. The subscriber utilizes an active interface embedded in an e-mail notification to control delivery of a non-literal, single media or multimedia message to the subscriber. Such a non-literal message includes, but is not limited to, any of a hyperlink-based message, a voicemail message, a facsimile, and a video clip. The active interface provides access to communications-related services as well, including access to stock/options trading and bill payment.

### BRIEF SUMMARY OF THE INVENTION

Embodiments of the present invention generally relate to actionable messaging. A message is sent to a device that outlines possible actions. Information for the message and action is stored and used when a response message is received. A user can then respond with a message specifying a desired action. The stored information is used to determine the action to perform and the action is performed. Various aspects of the present invention are set out in the appended claims.

A further understanding of the nature and advantages of the invention herein may be realized by reference of the remaining portions in the specifications and the attached drawings.

### BRIEF DESCRIPTION OF THE DRAWINGS

Fig. 1 illustrates a system for providing actionable messages according to one embodiment of the present invention.

Fig. 2 illustrates a simplified flowchart of a method for providing an actionable message according to one embodiment of the present invention.

Fig. 3 illustrates a system for providing actionable messages according to one embodiment of the present invention.

Fig. 4 illustrates an example of information included in stored information, an actionable message, a response message, and an action command.

### DETAILED DESCRIPTION OF THE INVENTION

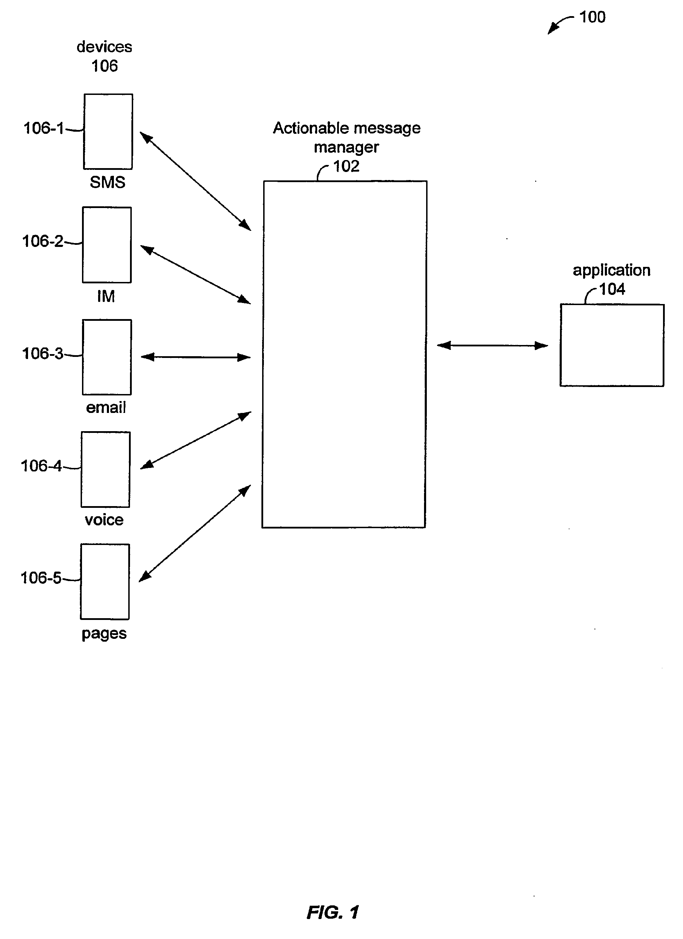

Fig. 1 illustrates a system 100 for providing actionable messages according to one embodiment of the present invention. System 100 includes an actionable message manager (AMM) 102, and application 104, and one or more devices 106. Entities in system 100 communicate through a network, such as the Internet, a local area network (LAN), a wide area network (WAN), a wireless network, an intranet, a private network, a public network, a switched network, or any other suitable communication network.

Devices 106 include any devices that can receive messages, such as a short message service device 106-1, an instant message (IM) device 106-2, an e-mail device 106-3, a voice device 106-4, a pager device 106-5, etc. In one embodiment, a device 106 comprises a communication type and an address for a user. For example, an e-mail device may be a computing device that is enabled to receive e-mail for an e-mail address associated with a user. While a user may use any computing device to access e-mail, it will be recognized that any computing device with e-mail access may be device 106-3.

Devices 106 include different communication capabilities. For example, SMS device 106-1 is configured to receive text messages only in one embodiment. Also, IM device 106-2 is configured to receive instant messages and may receive a URL in the instant message. Different device 106 communicates using different communication channels and protocols. AMM 102 is configured to determine the correct channels and protocols needed to communicate with each device 106.

Application 104 may be any application that can perform actions. For example, application 104 may be a web-based application that receives instructions for actions from actionable message manager 102. Application 104 may receive a uniform resource locater (URL) from AMM 102 that invokes a web application and indicates an action to perform. Application 104 may also be software code configured to perform actions based on instructions from AMM 102.

Actionable message manager 102 is configured to communicate with devices 106 and application 104. AMM 102 generates messages that are compatible in format with any of devices 106. For example, AMM 102 may send an instant message to IM device 106-2, an e-mail to device 106-3, a voice message device 106-4, etc. AMM 102 generates actionable messages in that a message sent to a device 106 can be replied to with a desired action. AMM 102 stores information for the sent actionable message that enables AMM 102 to determine a desired action when a response message is received from device 106. When the action is determined, AMM 102 communicates with application 104 to perform the action. The results of the action may then be sent to the device 106 that sent the message or any other device 106.

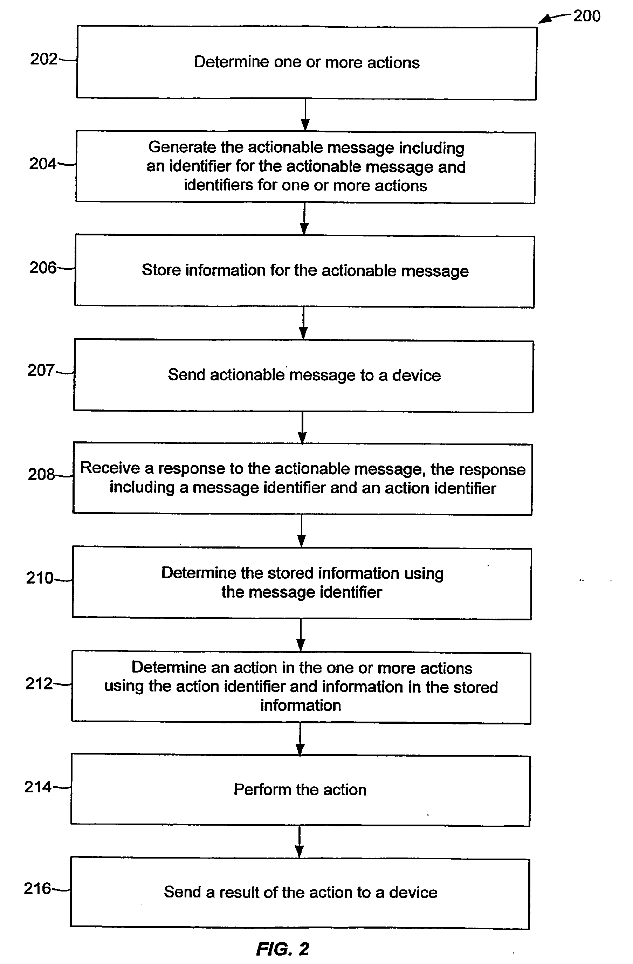

Fig. 2 illustrates a simplified flowchart 200 of a method for providing an actionable message according to one embodiment of the present invention. In step 202, one or more actions are determined. The actions may be any actions that can be performed using application 104. Examples of actions may be sending an e-mail, sending an instant message, performing a stock trade, retrieving a document, printing a document, or any other application-based action.

In step 204, an actionable message is generated. In one embodiment, the actionable message includes a message identifier for the actionable message and identifiers for the one or more actions. The message identifier may be included in a response message and is used to identify which sent actionable message the response is associated with. The message identifier is also used to retrieve the stored information as described below. Additionally, the identifiers for the one or more actions may be included in a response message and are used to determine actions to perform. Thus, if a user desires to perform an action in the one or more actions, the user may include the message identifier and identifiers for desired actions in a response message.

In step 206, information is stored for the actionable message. The information that is stored includes state information that is unique to the actionable message. For example, the actionable message is associated with a message identifier that may be used to retrieve the stored information when a response message for the actual message is received from a device 106. The message identifier may be any combination of characters that uniquely identifies the actionable message. Also, the message identifier may be associated with other information, such as unique user information (e.g., user's email address, phone number, or any return address). For example, when a response message is received, the stored information is retrieved using the message identifier and return address of the user that sent the message.

In addition to storing information that identifies the actionable message, information associated with one or more actions that may be performed is stored. For example, information that identifies which actions are associated with the actionable message is stored. If an actionable message is sent that allows a user to perform a first and second action, identifiers for the first and second actions are stored. If a first action is the action of sending the news for a stock and the second action is the action of sending a detailed quote, the numbers "1" and "2" may be associated with those actions in the stored information. The response to the actionable message may include the numbers "1" and/or "2" depending on which actions are desired. The numbers and stored information are then used to determine that the number "1" corresponds to the action of retrieving news about a stock and sending the retrieved news to a device and that the number "2" corresponds to retrieving a detailed quote and sending the retrieved detail quote to a device.

In one embodiment, the actionable message sent to device 106 includes a text message that identifies the action identifiers, actions, and/or message identifiers. The text message may also include content other than text, such as images, markup, etc. In one example, the text message may be a plain text format, a markup language, etc. In one embodiment, information that directly links back to information stored in AMM 102 is not included in the actionable message. For example, links with embedded information, such as URLs that are embedded in a web document, that, when selected, directly link back to information in AMM 102 are not sent with the actionable message. If direct links to the stored information are not included, AMM 102 is configured to determine stored information from information in the response message. Although it is described that a text message is sent without direct links back to information in AMM 102, it will be understood that a web-based message with URLs may also be sent as an actionable message. In this case, the message may link back to information that is used to determine the action desired.

When an actionable message is sent to device 106, if there are no direct links back to information stored in AMM 102 (e.g., URLs), the message, if responded to, may include the identifier for the actionable message. The identifier is then used to determine the stored information. In this case, the state of the sent actionable message may be retrieved when a response message is received. Additionally, the identifiers for the one or more actions, if invoked using the actionable message, may not be directly compatible with application 104. For example, the identifiers identify that a certain action should be performed. Information associated with the identifier in the stored information is used to determine which action to perform and how to perform the action. For example, AMM 102 may use the stored information to send an instruction to application 104 to perform an action. If a URL is associated with the action identifier in the stored information, AMM 102 make an HTTP request as specified by the URL to instruct application 104 to perform the action. Thus, AMM 102 acts as an intermediary for a device that needs to access application 104.

In step 207, AMM 102 sends the actionable message to one or more devices 106. The actionable message may be sent through any communication network. Also, AMM 102 may format the actionable message depending on the destination device. For example, an email may be formatted in a different way than an instant message. Also, the message may be formatted to different protocols the different destination devices 106 communicate in.

In step 208, AMM 102 receives a response to the actionable message from device 106. In one embodiment, the response includes the message identifier for the sent actionable message and an action identifier for a desired action. Although only one identifier is described as being received, it will be understood that multiple identifiers for multiple actions may be received in one response message.

In one embodiment, in addition to including the identifier for the actionable message and the identifier for a desired action, other parameters may also be included in the response message. For example, other parameters that may be used in performing the action may be included, such as account numbers, names, etc. Also, a service identifier that identifies a response message as a message for the actionable message service may be included. The service identifier may be used if AMM 102 handles other requests that may not be responses to an actionable message. For example, a response may include the content "actionable message <message identifier> <action identifier>". "Actionable message" is the service identifier and indicates that this message is a response to an actionable message. The service identifier may be omitted in some circumstances, such as when AMM 102 only processes responses to actionable messages. "<message identifier>" represents any identifier to a sent actionable message and "<action identifier>" represents any identifier for an action.

In step 210, AMM 102 determines the stored information using the message identifier received in the response message. In one embodiment, AMM 102 reviews the response message and determines what information in the response message corresponds to the message identifier. Also, information specific to a user or device 106 may be determined. For example, a user identifier or an address for the device 106 that sent the message is used with the message identifier to determine the stored information. AMM 102 then retrieves the stored information.

In step 212, AMM 102 determines an action in one or more actions using the identifier for the desired action and information in the stored information. For example, the identifier for the desired action in the response message is matched to an identifier in the stored information. Using the above example, if news is desired for a stock quote, a "1" is sent in the response message. AMM 102 then determines the action associated with the action identifier #1. The associated information may indicate that news for a stock should be retrieved. In one embodiment, the associated information may be a URL that retrieves news for the stock using application 104.

Accordingly, an identifier for the stored information and an identifier for the desired action in the response message are used to determine an action in the stored information. Accordingly, AMM 102 is an intermediary that uses information in the response message to determine information that is used to access application 104 for performing actions. Thus, the response message does not have to be compatible with application 104.

In step 214, the action is performed. In one embodiment, AMM 102 uses the stored information to determine how to perform the action. AMM 102 sends an instruction to cause application 104 to perform the desired action. For example, if a URL is associated with the action identifier, AMM 102 may make an HTTP request as specified by the URL to cause application 104 to perform an action. Actions that may be performed include printing a document, retrieving information, serving a web-page, etc. In one embodiment, the actions performed are web-based actions.

In step 216, the results of the performed action are sent to a device 106. In one embodiment, the result is sent to the device 106 that sent the response message. In another embodiment, the results may be sent to any other device 106. For example, email device 106-3 may send the response message but and the results may be sent to SMS device 106-1. Thus, a user may use a personal computer to send the response to the actual message and the results may be sent to a user's cellular phone through SMS.

In one embodiment, the response to the actual message is a plain text message. Also, in one embodiment, the information in the response is not compatible with application 104 by itself. For example, the identifiers found in the message do not invoke actions on application 104. Rather, the information in the response messages is used to access stored information to determine the action that is desired. The stored information is then used to perform the action with application 104.

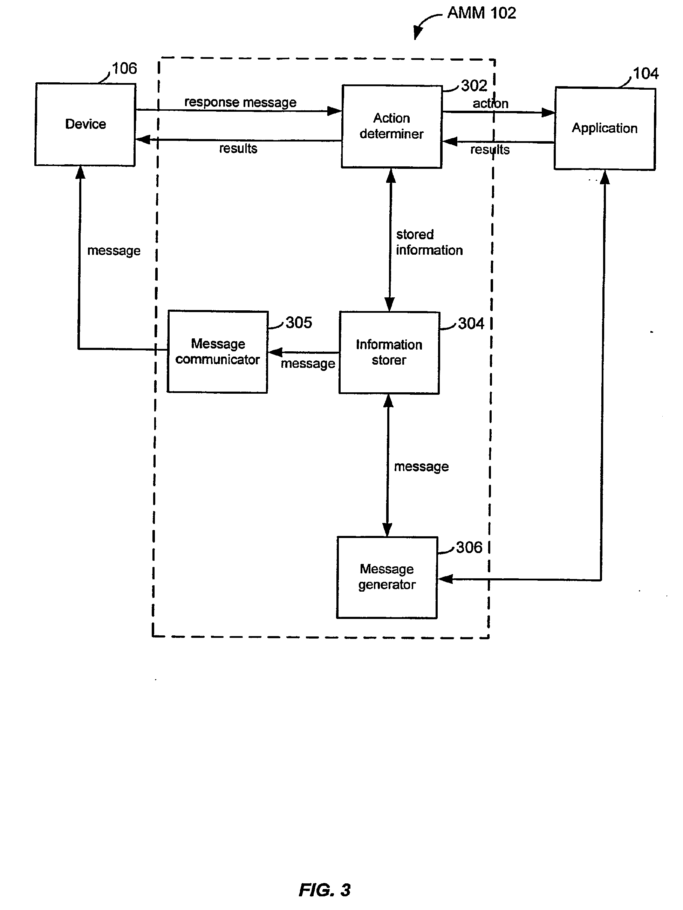

Fig. 3 illustrates a system 300 for providing actionable messages according to one embodiment of the present invention. System 300 includes device 106, actionable message manager 102, and application 104. AMM 102 includes an action determiner 302, an information storer 304, and a message generator 306.

Message generator 306 is configured to generate an actionable message. In one embodiment, message generator 306 generates a message by parsing web-based information. A program code may identify devices that the actionable message should be sent to and also actions that should be performed. For example, an XML document may be used to generate an actionable message. In one embodiment, the program code parses the XML document and determines actions that should be performed. For example, different tags in the XML document may indicate that an action should be performed. The program may generate a message for those actions. Accordingly, message generator 306 performs the functions described in steps 202 and 204 of Fig. 2.

Information storer 304 receives the actionable message and stores information for the actionable message. In one embodiment, information storer 304 may store a message identifier for the actionable message and one or more identifiers for one or more actions. Additionally, information storer 304 may store information usable in performing the one or more actions. The message identifier is used to uniquely identify the actionable message that is sent and is used to retrieve stored information corresponding to the actionable message. Accordingly, information storer 304 performs the functions described in step 206 of Fig. 2.

Message communicator 305 receives the generated message and sends the message to device 106. Message communicator 305 is configured to communicate with any device 106 and may format the message for a communication channel and protocol for a device. Accordingly, message communicator performs the functions described in step 207 of Fig. 2.

Device 106 receives the actionable message from message communicator 305 and sends a response message to AMM 102. When device 106 receives the actionable message, a user may determine a response message from information in the actionable message. In one embodiment, the response message includes a message identifier and an identifier for an action in one or more actions associated with the actionable message. The response message is then sent to AMM 102.

Action determiner 302 receives the response message from device 106 and is configured to determine an action to perform. Action determiner 302 determines the message identifier from the response message and uses the identifier to determine the stored information from information storer 304. The action identifier is then used to determine an action to perform from the stored information. Once the action to perform is determined, information on how to perform the action is determined from the stored information and the action is performed. Action determiner 302 communicates with application 104 to send a request for the action. Accordingly, action determiner 302 performs the functions described in steps 208, 210, 212, and 214 of Fig. 2.

Application 104 receives information for the action from action determiner 302 and performs the action. In one embodiment, the information for the action may be a web-based command that is interpreted by application 104 to perform the action. The result of the action is then generated by application 104. Accordingly, application 104 performs the functions described in step 214 of Fig. 2.

Action determiner 302 receives the result of the performed action from application 104 and sends the result to device 106. In one embodiment, action determiner 302 may send the result to any device 106 including devices other than the device 106 that sent the response message. Accordingly, action determiner 302 performs the functions described in step 216 of Fig. 2.

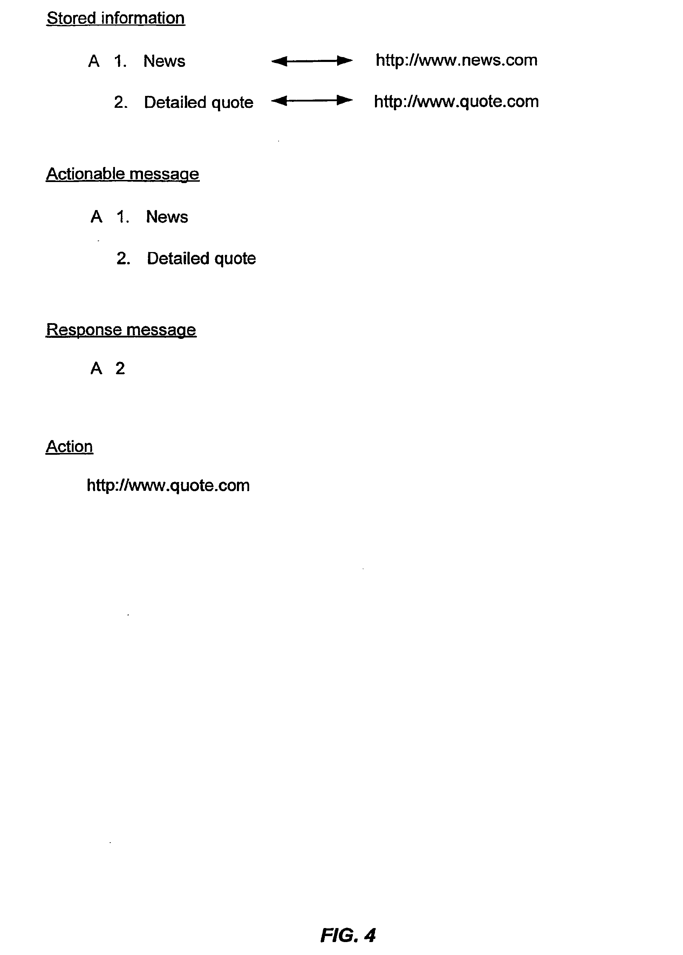

Fig. 4 illustrates an example of information included in stored information, an actionable message, a response message, and an action command. The stored information includes an message identifier of "A" and an identifier "1" that associates an action for retrieving news with a first action command (e.g., a first URL) and a second identifier "2" that associates an action for retrieved a detailed quote with a second action command (e.g., a second URL). The information found in the stored information may be used to perform an action with application 104.

The actionable message includes the message identifier, "A", in addition to the first and second action identifiers, "1" and "2". The message also includes a description of what actions the identifiers correspond to. In one embodiment, the actionable message does not include any URLs that are found in the stored information.

The response message includes the characters "A" and "2". The letter "A" may be the message identifier and the number "2" may indicate that the second action of retrieving a detailed quote is desired. In one embodiment, information associated with the response message, such as a username or return address, is used in addition to the character A to determine the stored information. Accordingly, stored information for identifier "A" is retrieved and the identifier for the action is determined. In this case, the identifier "2" corresponds to the URL "http://www.quote.com" in the stored information.

The URL is invoked using application 104. Application 104 then performs the action specified by the URL. In one example, a detailed quote corresponding to the URL is retrieved. The detailed quote can then be sent back to the device that sent the response message or any other device.

Accordingly, embodiments of the present invention enable an actionable message to be sent to a device. The actionable message is initiated by AMM 102 and allows a user to respond to the message with a desired action. AMM 102 stores information related to the message in order to allow for it to determine an action to be performed when a response message is received from the device. When the response message is received, information in the response message is used to determine the stored information. An action is then determined using information in the response message and information in the stored information. The action is performed and the results are sent to the device.

Embodiments of the present invention include many advantages. For example, notification messages are turned to actionable messages that allow a user to perform actions. Thus, a user does not have to switch communication channels in order to perform a desired action when receiving an alert. For example, when a stock alert is sent to a user, actions such as retrieving a quote, retrieving news, and buying or selling the stock are enabled by responding to the message.

While the present invention has been described using a particular combination of hardware and software implemented in the form of control logic, it should be recognized that other combinations of hardware and software are also within the scope of the present invention. The present invention may be implemented only in hardware, or only in software, or using combinations thereof.

The above description is illustrative but not restrictive. Many variations of the invention will become apparent to those skilled in the art upon review of the disclosure. The scope of the invention should, therefore, be determined not with reference to the above description, but instead should be determined with reference to the appended claims.

## Claims

1. A method for messaging with devices (106) in order to determine one or more actions to perform, the method **characterised by** ;
storing action information (202) at a computer system (102) that acts as an intermediary for devices (106) that need to access a set of applications (104) to perform the one or more actions, the action information providing an action identifier identifying each action in the one or more actions and a mapping between the action identifier and information specifying how the computer system (102) interacts with the set of applications (104) to perform the action corresponding to the action identifier;
storing state information (206) at the computer system (102) that is unique to a message to be sent to a device (106), the state information (206) providing a message identifier generated by the computer system (102) to uniquely identify the message and a mapping associating at least a portion of the action information with the message identifier generated by the computer system (102);
sending the message to a device (106) using the computer system (102), the message including the message identifier generated by the computer system (102) to uniquely identify the message and one or more action identifiers corresponding to actions represented in the message;
receiving a response message (208) from the device (106) at the computer system (102), the response message including the message identifier of the message that was sent to the device (106) and at least one of the one or more action identifiers for the actions represented in the message sent to the device (106);
retrieving the stored state information (210) that is unique to the message sent to the device using the computer system (102) to obtain the mapping associating at least a portion of the action information with the message identifier based on the message identifier received in the response message from the device (106);
retrieving stored action information (212) corresponding to an action in the one or more actions using the computer system (102) from the portion of the stored action information associated with the message identifier using the at least one of the one or more action identifiers for the actions represented in the message sent to the device (106); and
performing the action (214) using the action information.

2. The method of claim 1, wherein the action information comprises information compatible with a web-based application, wherein the web-based application is used to perform the action.

3. The method of claim 1, wherein the sent message comprises a text-based message and the response message comprises a text-based message.

4. The method of claim 1, further comprising sending (216) a result of the performed action to the device (106).

5. The method of claim 1, further comprising:
determining information indicative of the device (106) based on the response message; and
wherein retrieving the stored information associated the message comprises determining the stored information in response to the message identifier and the information indicative of the device.

6. The method of claim 5, wherein the information indicative of the device comprises at least one of information specific to the device (106) and information specific to a user associated with the device.

7. The method of claim 1, wherein sending (207) the message to the device (106) comprises sending the message to a mobile device.

8. An actionable messaging device (102) for generating and processing messages to determine actions to perform, the actionable messaging device comprising:
a processor; and
a memory coupled to the processor and configured to store processor-executable code, the processor-executable code **characterised by**:
a message generator (306) configured to generate messages identifying one or more actions, each of the messages including a message identifier generated by the processor to uniquely identify the message and one or more action identifiers generated by the processor for actions represented in the message;
an information storer (304) configured to store:
action information providing action identifiers identifying one or more actions and mappings between the action identifiers and information specifying how the processor interacts with a set of applications to perform an action corresponding to a particular action identifier, and
state information that is unique to a message to be sent to a device, the state information providing the message identifier for the message and a mapping associating a least a portion of the action information with the message identifier;
a receiver (302) configured to receive a response message from a device (106) to which a message was sent, wherein the response message includes a message identifier of the message sent to the device (106) and at least one of a set of action identifiers in the message sent to the device (106);
an action determiner (302) configured to retrieve stored state information that is unique to a message sent to the device (106) to obtain the mapping associating at least a portion of the action information with the message identifier using the message identifier received in the response message from the device (106) and to retrieve action information from at least a portion of the stored action information for an action in the one or more actions in response to the at least one of the set of action identifiers received in the response message; and
an action performer (302) configured to cause the action to be performed using the action information.

9. The device of claim 8, wherein the generated message comprises a text message.

10. The device of claim 8, wherein the response message comprises a text message.

11. The device of claim 8, wherein the one or more actions comprise web-based actions.

12. The device of claim 8, wherein the action determiner (302) determines the stored state information using at least the message identifier for the message sent to the device (106) and information specific to the response message.

13. The device of claim 12, wherein the information specific to the response message comprises information specific to a user.

14. A system (100) configured to perform actionable messaging, the system comprising:
one or more devices (106);
an application (104) configured to perform actions; and
an actionable message device (102) according to claim 8.

15. The system (100) of claim 14, wherein the one or more devices (106) comprise mobile devices.

16. The system (100) of claim 15, wherein the mobile devices (106) are configured to receive messages exclusive of web-based messages.

17. The system (100) of claim 15, wherein the mobile devices (106) are configured to send messages exclusive of web-based messages.

18. The system (100) of claim 14, wherein the application comprises a web-based application.

## Patentansprüche

1. Verfahren zur Nachrichtenübermittlung mit Geräten (106), um eine oder mehrere auszuführende Handlungen zu bestimmen, wobei das Verfahren durch Folgendes **gekennzeichnet** ist:
das Speichern von Handlungsinformationen (202) auf einem Rechnersystem (102), das als ein Mittler für Geräte (106) fungiert, die einen Zugriff auf eine Menge von Anwendungen (104) benötigen, um die eine oder mehreren Handlungen auszuführen, wobei die Handlungsinformationen eine Handlungskennung, die jede Handlung in der einen oder den mehreren Handlungen identifiziert, und eine Zuordnung zwischen der Handlungskennung und Informationen, die spezifizieren, wie das Rechnersystem (102) mit der Menge von Anwendungen (104) in Wechselwirkung tritt, um die der Handlungskennung entsprechende Handlung auszuführen, bereitstellen,
das Speichern von Zustandsinformationen (206) auf dem Rechnersystem (102), die eindeutig für eine an ein Gerät (106) zu sendende Nachricht sind, wobei die Zustandsinformationen (206) eine durch das Rechnersystem (102) erzeugte Nachrichtenkennung, um die Nachricht eindeutig zu identifizieren, und eine Zuordnung, die wenigstens einen Teil der Handlungsinformationen mit der durch das Rechnersystem (102) erzeugten Nachrichtenkennung verknüpft, bereitstellen,
das Senden der Nachricht an ein Gerät (106) unter Verwendung des Rechnersystems (102), wobei die Nachricht die durch das Rechnersystem (102) erzeugte Nachrichtenkennung, um die Nachricht eindeutig zu identifizieren, und eine oder mehrere Handlungskennungen, die den in der Nachricht dargestellten Handlungen entsprechen, einschließt,
das Empfangen einer Antwortnachricht (208) von dem Gerät (106) auf dem Rechnersystem (102), wobei die Antwortnachricht die Nachrichtenkennung der Nachricht, die an das Gerät (106) gesendet wurde, und wenigstens eine der einen oder mehreren Handlungskennungen für die in der an das Gerät (106) gesendeten Nachricht dargestellten Handlungen einschließt,
das Abrufen der gespeicherten Zustandsinformationen (210), die eindeutig für die unter Verwendung des Rechnersystems (102) an das Gerät gesendete Nachricht sind, um die Zuordnung zu erlangen, die auf der Grundlage der in der Antwortnachricht von dem Gerät (106) empfangenen Nachrichtenkennung wenigstens einen Teil der Handlungsinformationen mit der Nachrichtenkennung verknüpft,
das Abrufen von gespeicherten Handlungsinformationen (212), die einer Handlung in der einen oder den mehreren Handlungen unter Verwendung des Rechnersystems (102) entsprechen, aus dem Teil der gespeicherten Handlungsinformationen, der unter Verwendung der wenigstens einen der einen oder mehreren Handlungskennungen für die in der an das Gerät (106) gesendeten Nachricht dargestellten Handlungen mit der Nachrichtenkennung verknüpft ist, und
das Ausführen der Handlung (214) unter Verwendung der Handlungsinformationen.

2. Verfahren nach Anspruch 1, wobei die Handlungsinformationen Informationen umfassen, die kompatibel mit einer webgestützten Anwendung sind, wobei die webgestützte Anwendung verwendet wird, um die Handlung auszuführen.

3. Verfahren nach Anspruch 1, wobei die gesendete Nachricht eine Nachricht auf Textgrundlage umfasst und die Antwortnachricht eine Nachricht auf Textgrundlage umfasst.

4. Verfahren nach Anspruch 1, das ferner das Senden (216) eines Ergebnisses der ausgeführten Handlung an das Gerät (106) umfasst.

5. Verfahren nach Anspruch 1, das ferner Folgendes umfasst:
das Bestimmen von Informationen, die auf das Gerät (106) hinweisen, auf der Grundlage der Antwortnachricht,
wobei das Abrufen der mit der Nachricht verknüpften gespeicherten Informationen das Bestimmen der gespeicherten Informationen als Reaktion auf die Nachrichtenkennung und die Informationen, die auf das Gerät hinweisen, umfasst.

6. Verfahren nach Anspruch 5, wobei die Informationen, die auf das Gerät hinweisen, wenigstens Informationen, die spezifisch für das Gerät (106) sind, und/oder Informationen, die spezifisch für einen mit dem Gerät verknüpften Benutzer sind, umfassen.

7. Verfahren nach Anspruch 1, wobei das Senden (207) der Nachricht an das Gerät (106) das Senden der Nachricht an ein mobiles Gerät umfasst.

8. Handlungsbefähigendes Nachrichtenübermittlungsgerät (102) zum Erzeugen und Verarbeiten von Nachrichten, um auszuführende Handlungen zu bestimmen, wobei das handlungsbefähigende Nachrichtenübermittlungsgerät Folgendes umfasst:
einen Prozessor und
einen Speicher, der an den Prozessor gekoppelt und dafür konfiguriert ist, durch den Prozessor ausführbaren Code zu speichern, wobei der durch den Prozessor ausführbare Code durch Folgendes **gekennzeichnet** ist:
einen Nachrichtengenerator, der dafür konfiguriert ist, Nachrichten zu erzeugen, die eine oder mehrere Handlungen identifizieren, wobei jede der Nachrichten eine durch den Prozessor erzeugten Nachrichtenkennung, um die Nachricht eindeutig zu identifizieren, und eine oder mehrere durch den Prozessor erzeugte Handlungskennungen für in der Nachricht dargestellte Handlungen einschließt,
einen Informationsspeicher (304), der dafür konfiguriert ist, Folgendes zu speichern:
Handlungsinformationen, die Handlungskennungen, die eine oder mehrere Handlungen identifizieren, und Zuordnungen zwischen den Handlungskennungen und Informationen, die spezifizieren, wie der Prozessor mit einer Menge von Anwendungen in Wechselwirkung tritt, um eine der Handlungskennung entsprechende Handlung auszuführen, bereitstellen, und
Zustandsinformationen, die eindeutig für eine an ein Gerät zu sendende Nachricht sind, wobei die Zustandsinformationen die Nachrichtenkennung für die Nachricht und eine Zuordnung, die wenigstens einen Teil der Handlungsinformationen mit der Nachrichtenkennung verknüpft, bereitstellen,
einen Empfänger (302), der dafür konfiguriert ist, eine Antwortnachricht von einem Gerät (106) zu empfangen, an das eine Nachricht gesendet wurde, wobei die Antwortnachricht eine Nachrichtenkennung der an das Gerät (106) gesendeten Nachricht und wenigstens eine von einer Menge von Handlungskennungen in der an das Gerät (106) gesendeten Nachricht einschließt,
eine Handlungsbestimmungsvorrichtung (302), die dafür konfiguriert ist, die gespeicherten Zustandsinformationen abzurufen, die eindeutig für eine an das Gerät gesendete Nachricht sind, um die Zuordnung zu erlangen, die unter Verwendung der in der Antwortnachricht von dem Gerät (106) empfangenen Nachrichtenkennung wenigstens einen Teil der Handlungsinformationen mit der Nachrichtenkennung verknüpft, und als Reaktion auf die wenigstens eine von der Menge an in der Antwortnachricht empfangenen Handlungskennungen die gespeicherten Handlungsinformationen für eine Handlung in der einen oder den mehreren Handlungen aus wenigstens einem Teil der gespeicherten Handlungsinformationen abzurufen, und
eine Handlungsausführungsvorrichtung (302), die dafür konfiguriert ist, unter Verwendung der Handlungsinformationen, dass die Handlung ausgeführt wird.

9. Gerät nach Anspruch 8, wobei die erzeugte Nachricht eine Textnachricht umfasst.

10. Gerät nach Anspruch 8, wobei die Antwortnachricht eine Textnachricht umfasst.

11. Gerät nach Anspruch 8, wobei die eine oder mehreren Handlungen webgestützte Handlungen umfassen.

12. Gerät nach Anspruch 8, wobei die Handlungsbestimmungsvorrichtung (302) die gespeicherten Zustandsinformationen unter Verwendung wenigstens einer Nachrichtenkennung für die an das Gerät (106) gesendete Nachricht und von Informationen, die für die Antwortnachricht spezifisch sind, bestimmt.

13. Gerät nach Anspruch 12, wobei die Informationen, die für die Antwortnachricht spezifisch sind, Informationen umfassen, die für einen Benutzer spezifisch sind.

14. System (100), das dafür konfiguriert ist, eine handlungsbefähigende Nachrichtenübermittlung auszuführen, wobei das System Folgendes umfasst:
ein oder mehrere Geräte (106),
eine Anwendung (104), die dafür konfiguriert ist, Handlungen auszuführen, und
ein handlungsbefähigendes Nachrichtenübermittlungsgerät (102) nach Anspruch 8.

15. System (100) nach Anspruch 14, wobei das eine oder die mehreren Geräte (106) mobile Geräte umfassen.

16. System (100) nach Anspruch 15, wobei die mobilen Geräte (106) dafür konfiguriert sind, Nachrichten, ausschließlich von webgestützten Nachrichten, zu empfangen.

17. System (100) nach Anspruch 15, wobei die mobilen Geräte (106) dafür konfiguriert sind, Nachrichten, ausschließlich von webgestützten Nachrichten, zu senden.

18. System (100) nach Anspruch 14, wobei die Anwendung eine webgestützte Anwendung umfasst.

## Revendications

1. Procédé pour échanger des messages avec des dispositifs (106) afin de déterminer une ou plusieurs action(s) à réaliser, ledit procédé **se caractérisant par** :
le stockage d'informations d'action (202) au niveau d'un système informatique (102) jouant le rôle d'intermédiaire pour des dispositifs (106) qui ont besoin d'accéder à un jeu d'applications (104) afin de réaliser la ou les action(s), les informations d'action fournissant un identifiant d'action qui identifie chaque action dans la ou les action(s) et un mappage entre l'identifiant et les informations d'action spécifiant comment le système informatique (102) interagit avec le jeu d'applications (104) pour réaliser l'action correspondant à l'identifiant d'action ;
le stockage au niveau d'un système informatique (102) d'informations d'état (206) qui sont propres à un message à envoyer à un dispositif (106), les informations d'état (206) fournissant un identifiant de message généré par le système informatique (102) afin d'identifier de manière univoque le message et un mappage associant au moins une partie des informations d'action avec l'identifiant de message généré par le système informatique (102) ;
l'envoi du message à un dispositif (106) au moyen du système informatique (102), le message incluant l'identifiant de message généré par le système informatique (102) pour identifier le message de manière univoque et un ou plusieurs identifiant(s) d'action correspondant à des actions représentées dans le message ;
la réception d'un message de réponse (208) venant du dispositif (106) au niveau du système informatique (102), le message de réponse comprenant l'identifiant de message du message qui avait été envoyé au dispositif (106) et au moins un ou plusieurs identifiant(s) d'action pour les actions représentées dans le message envoyé au dispositif (106) ;
la récupération des informations d'état stockées (210) qui sont propres au message envoyé au dispositif au moyen du système informatique (102) pour obtenir le mappage qui associe au moins une partie des informations d'action avec l'identifiant de message sur la base de l'identifiant de message reçu dans le message de réponse venant du dispositif (106) ;
la récupération d'informations d'action stockées (212) correspondant à une action dans la/les action(s) au moyen du système informatique (102) à partir de la partie des informations d'action stockées associées à l'identifiant de message en utilisant la/les action(s) parmi le(s) identifiant(s) d'action pour les actions représentées dans le message envoyé au dispositif (106) ; et réaliser l'action (214) au moyen des informations d'action.

2. Procédé selon la revendication 1, dans lequel les informations d'action comprennent des informations compatibles avec une application Web, dans lequel l'application Web est utilisée pour réaliser l'action.

3. Procédé selon la revendication 1, dans lequel le message envoyé comprend un message texte et le message de réponse comprend un message texte.

4. Procédé selon la revendication 1, comprenant en outre l'envoi (216) d'un résultat de l'action réalisée au dispositif (106).

5. Procédé selon la revendication 1 comprenant en outre :
la détermination d'informations indicatives du dispositif (106) sur la base du message de réponse ; et
dans lequel la récupération des informations stockées associées au message comprend la détermination des informations stockées en réponse à l'identifiant de message et aux informations indicatives du dispositif.

6. Procédé selon la revendication 5, dans lequel les informations indicatives du dispositif comprennent au moins des informations spécifiques au dispositif (106) et/ou des informations spécifiques à un utilisateur associé au dispositif.

7. Procédé selon la revendication 1, dans lequel l'envoi (207) du message au dispositif (106) comprend l'envoi du message à un dispositif mobile.

8. Dispositif d'échange de messages activable (102) pour générer et traiter des messages afin de déterminer des actions à réaliser, le dispositif d'échange de messages activable comprenant :
un processeur ; et
une mémoire couplée au processeur et configurée pour stocker du code exécutable par processeur, le code exécutable par processeur **se caractérisant par** :
un générateur de message (306) configuré pour générer des messages identifiant une ou plusieurs action(s), chacun des messages comprenant un identifiant de message généré par le processeur afin d'identifier de manière univoque le message et un ou plusieurs identifiant(s) d'action généré(s) par le processeur pour des actions représentées dans le message ;
un stockeur de données (304) configuré pour stocker :
des informations d'actions fournissant des identifiants d'action identifiant une ou plusieurs action(s) et des mappages entre les identifiants et informations d'action spécifiant comment le processeur interagit avec un jeu d'applications pour réaliser une action correspondant à un identifiant d'action donné, et
des informations d'état qui sont propres à un message à envoyer à un dispositif (106), les informations d'état fournissant l'identifiant de message pour le message et un mappage associant au moins une partie des informations d'action à l'identifiant de message ;
un récepteur (302) configuré pour recevoir un message de réponse d'un dispositif (106) auquel un message a été envoyé, dans lequel le message de réponse inclut un identifiant de message du message envoyé au dispositif (106) et au moins un identifiant parmi un jeu d'identifiants d'action dans le message envoyé au dispositif (106) ;
un détermineur d'action (302) configuré pour récupérer des informations d'état stockées qui sont propres à un message envoyé au dispositif (106) pour obtenir le mappage associant au moins une partie des informations d'action à l'identifiant de message au moyen de l'identifiant de message reçu dans le message de réponse venant du dispositif (106) et pour récupérer des informations d'action d'au moins une partie des informations d'action stockées pour une action parmi la/les action(s) en réponse à l'identifiant/aux identifiants du jeu d'identifiants d'action reçus dans le message de réponse ; et
un réalisateur d'action (302) configuré pour faire que l'action soit réalisée au moyen des informations d'action.

9. Dispositif de la revendication 8, dans lequel le message généré comprend un message texte.

10. Dispositif de la revendication 8, dans lequel le message de réponse comprend un message texte.

11. Dispositif de la revendication 8, dans lequel la/les action(s) comprend/comprennent des actions sur le Web.

12. Dispositif de la revendication 8, dans lequel le détermineur d'action (302) détermine les informations d'état stockées en utilisant au moins l'identifiant de message pour le message envoyé au dispositif (106) et des informations spécifiques au message de réponse.

13. Dispositif de la revendication 12, dans lequel les informations spécifiques au message de réponse comprennent des informations spécifiques à un utilisateur.

14. Système (100) configuré pour réaliser un échange de messages activable, le système comprenant :
un ou plusieurs dispositif(s) (106) ;
une application (104) configurée pour réaliser des actions ; et
un dispositif de message activable (102) selon la revendication 8.

15. Système (100) de la revendication 14, dans lequel le ou les dispositif(s) comprend/comprennent des dispositifs mobiles.

16. Système (100) de la revendication 15, dans lequel les dispositifs mobiles (106) sont configurés pour recevoir des messages à l'exclusion de messages Web.

17. Système (100) de la revendication 15, dans lequel les dispositifs mobiles (106) sont configurés pour envoyer des messages à l'exclusion de messages Web.

18. Système (100) de la revendication 14, dans lequel l'application comprend une application Web.
